# EUROPEAN PATENT APPLICATION

(11) **EP 4 652 836 A1**
(43) Date of publication of application: **26.11.2025**
(21) Application number: 25174770.5
(22) Date of filing: 07.05.2025
(51) Int. Cl.: A01M 7/00, B05B 15/68

(54) **COMPUTER VISION CONTROL OF SPRAY NOZZLES AND RELATED SYSTEMS, CIRCUITRY, AND METHODS**

(30) Priority: 23.05.2024 US 202463651077 P
(71) Applicant: Agco Corporation, Duluth, Georgia 30096 (US)
(72) Inventor: BEER, Benjamin Michael, Jackson, 56143 (US); SNYDER, Todd Brandon, Jackson, 56143 (US)
(74) Representative: AGCO Intellectual Property Department

(57) **Abstract**

Computer vision control of spray nozzles and related systems, circuitry, and methods are disclosed. A circuitry of a computer vision sprayer control system receives an image signal captured by a computer vision system disposed at a distal end of a boom arm of a boom carried by a crop sprayer. The circuitry provides a spray nozzle control signal to a spray nozzle controller configured to control operation of a spray nozzle at the distal end of the boom arm. The spray nozzle is electrically controllable with at least one degree of freedom. The circuitry includes a processor to determine adjustments to make to the spray nozzle based, at least in part, on the image signal and generate the spray nozzle control signal responsive to the determined adjustments. A method includes retrieving a spray maneuver and determining adjustments to make to the spray nozzle to execute the spray maneuver.

## Description

### CROSS-REFERENCE TO RELATED APPLICATIONS

Not applicable.

### FIELD

Embodiments of the present disclosure relate generally to agricultural machines, such as agricultural crop sprayers. More specifically, embodiments of the present disclosure relate to computer vision control of spray nozzles and related systems, circuitry, and methods.

### BACKGROUND

Product delivery systems of agricultural machines (e.g., sprayers, spreaders) use various mechanisms for conveying a material, such as fertilizer, pesticide, or herbicide, to a field (e.g., soil in the field and/or crops in the field). The product delivery systems may include conduits (e.g., tubes, hoses, flow channels, etc.) in operable communication with a storage tank storing a material to be applied to the field. The product delivery system may further include a boom configured to laterally extend from a chassis of the agricultural machine to apply the material to the field as the agricultural machine traverses the field. During application processes, the boom is laterally extended from the chassis and the material flows through the product delivery system.

The edges of agricultural fields where crops are not planted may be treated differently than the planted area. For example, it is often desirable to permit grasses to grow around the edges to limit the effects of erosion, but to apply a selective herbicide to kill weeds that would otherwise spread to the planted area. Herbicide applied to the crop area may kill grass, and so may not be suitable for the edges of the field. The edges may be treated before or after treatment of the planted area, using for example, a utility task vehicle (UTV) with a product tank and a spray nozzle.

### BRIEF SUMMARY

In an aspect of the invention there is provided a circuitry of a computer vision sprayer control system. The circuitry includes an input terminal to receive an image signal captured by a computer vision system disposed at a distal end of a boom arm of a boom carried by a crop sprayer. The circuitry also includes an output terminal to provide a spray nozzle control signal to a spray nozzle controller configured to control operation of a spray nozzle at the distal end of the boom arm. The spray nozzle is electrically controllable, by the spray nozzle controller, with at least one degree of freedom. The circuitry further includes one or more processors operably coupled to the input terminal and the output terminal. The one or more processors are configured to determine one or more adjustments to make to the spray nozzle based, at least in part, on the image signal. The one or more processors are also configured to generate the spray nozzle control signal responsive to the one or more determined adjustments.

In some embodiments, a spray nozzle is configured to make at least three of vertical adjustments, horizontal adjustments, rotational adjustments, or spray pattern width adjustments.

In some embodiments, an image signal corresponds to a three-dimensional image.

In some embodiments, one or more processors are configured to implement an artificial intelligence model trained to identify, responsive to one or more of an object or a feature identified from an image signal, a spray maneuver corresponding to the identified object or feature. One or more adjustments to make to a spray nozzle are selected to execute the identified spray maneuver.

In an aspect of the invention there is provided a computer vision sprayer control system. The computer vision sprayer control system includes a computer vision system, a spray nozzle, a spray nozzle controller, and a circuitry. The computer vision system is at a distal end of a boom arm of a boom carried by a crop sprayer. The computer vision system is configured to generate an image signal. The spray nozzle is mounted at the distal end of the boom arm. The spray nozzle has at least one electrically controllable degree of freedom. The spray nozzle controller is operably coupled to the spray nozzle. The spray nozzle controller is configured to control the at least one electrically controllable degree of freedom of the spray nozzle responsive to a spray nozzle control signal. The circuitry is operably coupled to the computer vision system and the spray nozzle controller. The circuitry is configured to determine one or more adjustments to make to the spray nozzle based, at least in part, on the image signal and generate the spray nozzle control signal responsive to the one or more determined adjustments.

In some embodiments, a computer vision sprayer control system includes one or more sensors mounted to a boom arm. The one or more sensors are configured to generate one or more sensor signals indicating detected motion of the boom arm. Circuitry is configured to determine one or more adjustments to make to a spray nozzle based, at least in part, on the one or more sensor signals.

In some embodiments, one or more sensors include one or more of an accelerometer or a height sensor.

In some embodiments, a computer vision sprayer control system includes a communication interface configured to enable a circuitry to engage in bi-directional communication with a cloud server.

In some embodiments, a circuitry is configured to update training of an artificial intelligence model implemented by the circuitry responsive to training information received from a cloud server.

In some embodiments, a circuitry is configured to transmit locally-generated training information of an artificial intelligence model implemented by the circuitry to the cloud server.

In some embodiments, at least one electrically controllable degrees of freedom of a spray nozzle includes at least three of vertical adjustment, horizontal adjustment, rotational adjustment, or spray pattern width adjustment.

In some embodiments, a spray nozzle has four electrically controllable degrees of freedom.

In some embodiments, a spray nozzle includes a fan blade nozzle.

In some embodiments, a computer vision sprayer control system includes a plurality of main nozzles distributed along a boom arm. The plurality of main nozzles is configured to spray a main product. A spray nozzle comprises a secondary nozzle configured to spray a secondary product that is different from the main product.

In some embodiments, a secondary nozzle is configured to spray a secondary product simultaneously with spraying, by a plurality of main nozzles, of a main product.

In an aspect of the invention there is provided a method of operating a computer vision sprayer control system. The method includes identifying, from an image signal provided by a computer vision system at a distal end of a boom arm, one or more of an object or a feature corresponding to a use case of a plurality of known use cases for a spray nozzle at the distal end of the boom arm. The spray nozzle is controllable with at least one degree of freedom. The method includes retrieving, from a data storage device, a spray maneuver corresponding to the use case to execute with the spray nozzle at the distal end of the boom arm. The method also includes determining one or more adjustments to make to the spray nozzle to execute the spray maneuver and generating a spray nozzle control signal responsive to the one or more determined adjustments. The method includes providing the spray nozzle control signal to a spray nozzle controller to control the spray nozzle to make the one or more determined adjustments according to the retrieved spray maneuver.

In some embodiments, determining one or more adjustments to make to a spray nozzle to execute a spray maneuver includes determining one or more of vertical adjustments, horizontal adjustments, rotational adjustments, or spray pattern width adjustments.

In some embodiments, identifying one or more of an object or a feature includes identifying a tree.

In some embodiments, retrieving a spray maneuver includes retrieving a tree spraying maneuver.

In some embodiments, a tree spraying maneuver includes sweeping a spray pattern up a tree trunk and sweeping the spray pattern laterally across a tree canopy.

Within the scope of this application, it should be understood that the various aspects, embodiments, examples, and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the disclosure will now be described, by way of example only, with reference to the accompanying drawings, in which:
FIG. 1 shows a crop sprayer used to deliver chemicals to agricultural crops in a field, according to some embodiments;
FIG. 2 is a simplified perspective view of a portion of a boom arm illustrated in FIG. 1;
FIG. 3A is a simplified rear view of a portion of the boom arm of FIG. 1, showing main nozzles spaced along the boom arm and connected to a main product line;
FIG. 3B shows the distal end of the boom arm in more detail;
FIG. 3C is a simplified view showing how a secondary nozzle may be coupled to the boom arm;
FIG. 4A is a side view of the secondary nozzle of FIG. 3A, FIG. 3B, and FIG. 3C showing vertical adjustment of the secondary nozzle;
FIG. 4B is a top view of the secondary nozzle of FIG. 3A, FIG. 3B, and FIG. 3C showing horizontal adjustment of the secondary nozzle;
FIG. 4C is a front view of the secondary nozzle of FIG. 3A, FIG. 3B, and FIG. 3C showing rotational adjustment of the secondary nozzle;
FIG. 4D is a top view of the secondary nozzle of FIG. 3A, FIG. 3B, and FIG. 3C showing spray pattern width adjustment;
FIG. 5 is a block diagram of a computer vision sprayer control system to control the secondary nozzle of FIG. 3A, FIG. 3B, and FIG. 3C, according to some embodiments;
FIG. 6 is a plan view of an image captured by the computer vision system of FIG. 3A, FIG. 3B, FIG. 3C, and FIG. 5 to illustrate an example of control of the secondary nozzle to spray a tree;
FIG. 7 is a flowchart illustrating a method of operating a computer vision sprayer control system, according to some embodiments;
FIG. 8 is a simplified schematic illustrating how a secondary nozzle may be connected to the secondary product tank;
FIG. 9 is a simplified schematic illustrating another way the secondary nozzle may be connected to the secondary product tank; and
FIG. 10 is a block diagram of circuitry that, in some embodiments, may be used to implement various functions, operations, acts, processes, and/or methods disclosed herein.

### DETAILED DESCRIPTION

The illustrations presented herein are not actual views of any particular machine or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "about" used in reference to a given parameter is inclusive of the stated value and has the meaning dictated by the context (e.g., it includes the degree of error associated with measurement of the given parameter).

As used herein, the term "substantially" in reference to a given parameter, property, or condition means and includes to a degree that one of ordinary skill in the art would understand that the given parameter, property, or condition is met with a small degree of variance, such as, for example, within acceptable manufacturing tolerances. By way of example, depending on the particular parameter, property, or condition that is substantially met, the parameter, property, or condition may be at least 90% met, at least 95% met, or even at least 99% met.

As used throughout, ranges are used as shorthand for describing each and every value that is within the range. Any value within the range can be selected as the terminus of the range.

As discussed above, a secondary product different from a main product may be applied at edges of an agricultural field before or after applying the main product to a planted or yet to be planted area of the agricultural field. The application of different products at different times, however, may be inefficient in time expenditure and equipment usage. One way to provide different chemicals to an agricultural field edge and a planted or yet to be planted area of the agricultural field is to provide a crop spray with separate product tanks (e.g., a main product tank and a secondary product tank) and separate spraying systems. For example, main spray nozzles for spraying a main product on the planted or to be planted area may be spaced along a boom arm. A secondary nozzle for spraying a secondary product different from the main product at the agricultural field edge may be positioned at or near a distal end of the boom.

As a specific, non-limiting example, while a crop sprayer operates near an edge of the agricultural field, the main spray nozzles may spray the main product downward toward the planted or to be planted area. At the same time, the secondary spray nozzle sprays the secondary product outward from the distal end of the boom toward the edge of the agricultural field, allowing the secondary product and the main product to be applied simultaneously. As a result, the crop sprayer may spray appropriate products to the field edge and the planted or to be planted area with a single pass of the crop sprayer at the field edge. Accordingly, a separate pass (e.g., by a UTV) to spray the field edge with the secondary product may not be taken, saving time and reducing equipment usage. Reduced equipment usage may reduce equipment wear and tear, fuel consumption, and damage to the agricultural field and/or crops (e.g., tire damage), which may in turn reduce expenses and impact on the environment.

A high-precision, electrically adjustable spray nozzle may be used as a secondary nozzle at or near a distal end of a boom arm of a crop sprayer to apply the secondary chemical (e.g., to an edge of an agricultural field). For example, the secondary nozzle may include a fan blade nozzle configured to produce a spray pattern resembling a shape of a fan blade (e.g., an at least substantially planar spray pattern). The secondary spray nozzle may be equipped with electrically controllable motors (e.g., servo motors) to adjust vertical and horizontal pointing angles of the secondary spray nozzle, as well as rotation of the spray nozzle to electrically control an angle of the fan blade spray pattern relative to the ground. The secondary spray nozzle may also be electrically controllable to adjust an angle of the fan blade spray pattern itself to provide a wider or narrower fan blade spray pattern. In this example, four degrees of freedom are electrically controllable.

Although a precise, highly controllable (e.g., with one, two, three, four, or even more degrees of freedom) spray nozzle may enable precise application of a secondary product, a boom arm may in some instances be relatively long (e.g., up to 50 or 60 feet long). A long boom arm placing the secondary nozzle far from an operator may interfere with the operator's ability to accurately observe spray targets of the secondary nozzle and a position of the secondary nozzle and control the secondary nozzle. Accordingly, potential benefits resulting from the high precision and controllability of the secondary spray nozzle may be at least partially curtailed because the secondary nozzle is located too far from the operator to allow the operator to take full advantage of the secondary nozzle's capabilities.

Disclosed herein are nozzle control systems for automatically adjusting a spray nozzle (e.g., a high-precision, electrically adjustable spray nozzle) positioned at or near a distal end of a boom arm of a crop sprayer using a computer vision system positioned at or near the distal end of the boom arm. A computer vision sprayer control system according to some embodiments disclosed herein may involve autonomous control of the electrically adjustable spray nozzle (e.g., without intervention from an operator of a crop sprayer). A computer vision sprayer control system according to some embodiments disclosed herein may involve relatively small intervention from an operator of a crop sprayer (e.g., one-click control of the electrically adjustable spray nozzle).

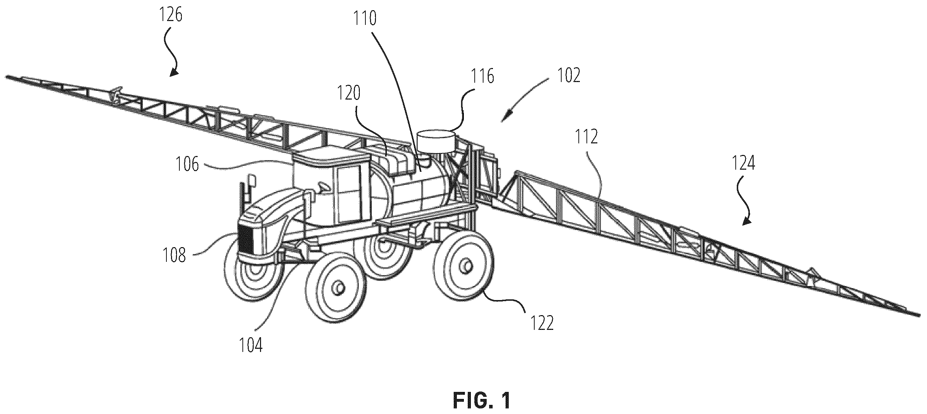

FIG. 1 shows a crop sprayer 102 used to deliver chemicals to agricultural crops in an agricultural field, according to some embodiments. The crop sprayer 102 includes a chassis 104 and an operator cab 106 mounted on the chassis 104. The chassis 104 is supported in an agricultural field by ground-engaging elements 122, which are pictured as wheels, but may also include tracks, skis, etc. The operator cab 106 may house controls for the crop sprayer 102. An engine 108 may be mounted on a forward portion of the chassis 104 in front of the operator cab 106 or may be mounted on a rearward portion of the chassis 104 behind the operator cab 106. The engine 108 may be commercially available from a variety of sources and may include, for example, a diesel engine or a gasoline powered internal combustion engine, a battery-powered electric motor, *etc.* The engine 108 provides energy to propel the crop sprayer 102 through an agricultural field on wheels or tracks, and may also provide energy to spray liquids from the crop sprayer 102.

The crop sprayer 102 includes a main product tank 110 to store a liquid (a main product) to be sprayed on the agricultural field (e.g., a planted or a yet to be planted area of the agricultural field). The liquid may include chemicals, such as but not limited to, herbicides, pesticides, fungicides, and/or fertilizers. The main product tank 110 may be mounted on the chassis 104, either in front of or behind the operator cab 106. The crop sprayer 102 also includes a secondary product tank 116 to store another liquid (a secondary product) to be sprayed on or near the agricultural field. The secondary product may include chemicals, such as but not limited to, herbicides, pesticides, fungicides, and/or fertilizers. A rinse tank 120 is configured to store clean water for rinsing out flow lines and/or diluting chemicals to be applied. In some embodiments, the rinse tank 120 may be omitted, or a tank originally intended for clean water may be used as the secondary product tank 116.

A boom 112 on the crop sprayer 102 is used to distribute the main product from the main product tank 110 over a wide swath (e.g., a planted or a yet to be planted area) as the crop sprayer 102 is driven through the agricultural field. The boom 112 may include two boom arms 124, 126, one extending at least substantially laterally from each side of the chassis 104. The boom 112 may include two or more sections that can fold for transport on public roadways, and unfold (i.e., to the position shown in FIG. 1) for field operations. The boom 112 may be of any selected length, such as about 20 meters, about 30 meters, about 40 meters, etc. The boom 112 may be made of various materials, such as steel, aluminum, carbon fiber, composites, etc. For example, the boom 112 may be as described in U.S. Patent Application Publication 2022/0217965 A1, "Boom for an Agricultural Crop Sprayer and Method of Manufacture," published July 14, 2022.

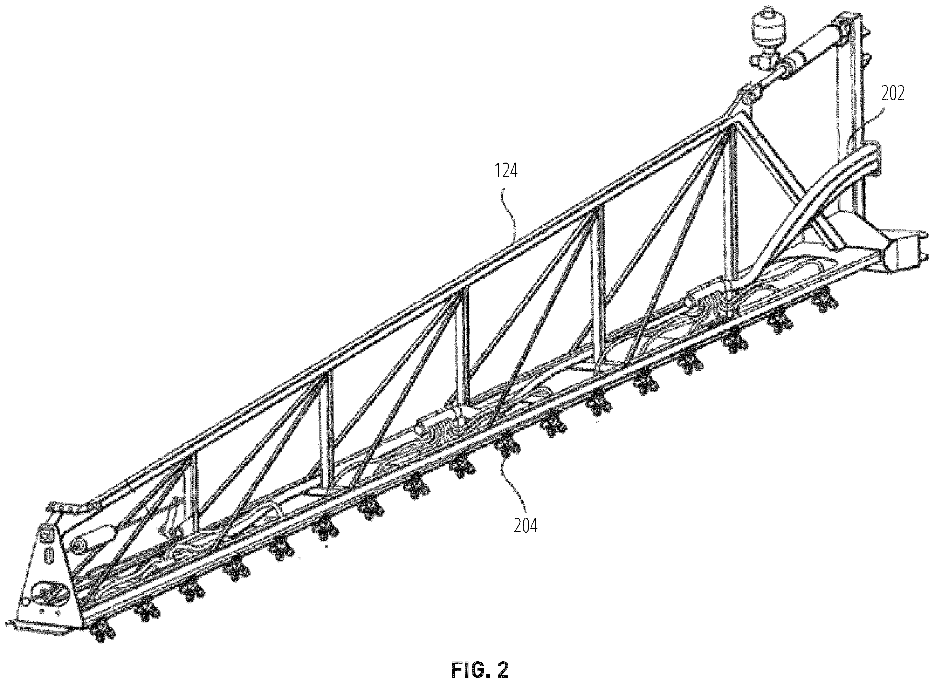

FIG. 2 is a simplified perspective view of a portion of one of the boom arms 124 illustrated in FIG. 1. A plurality of main nozzles 204 are spaced along the boom arm 124 and in fluid connection to the main product tank 110 (FIG. 1). In use, main product from the main product tank 110 is conveyed from the main product tank 110 by a liquid distribution system 202 to the main nozzles 204. The liquid distribution system 202, which may be mounted on the boom arm 124, includes at least one supply line and, optionally, a recirculation line connected to the main product tank 110. Recirculation of liquid to the main product tank 110 may be useful for purging lines when changing products without wasting product onto the ground or damaging crops with excess product. Recirculation systems are described in, for example, International Patent Application PCT/IB2023/057023, "Liquid Distribution Systems, Crop Sprayers, and Related Methods," filed July 7, 2023. In some embodiments, the recirculation line may be omitted, and the liquid distribution system 202 can be purged at a shop or mixing plant, where liquid can be captured, such as on a catch pad.

The boom arm 124 may include multiple sections that fold for transport and unfold for field operations, and may include sections that move in response to obstacles, such as described in U.S. Patent 10,212,927, "Tri-Directional Break-Away Boom Assembly," granted February 26, 2019.

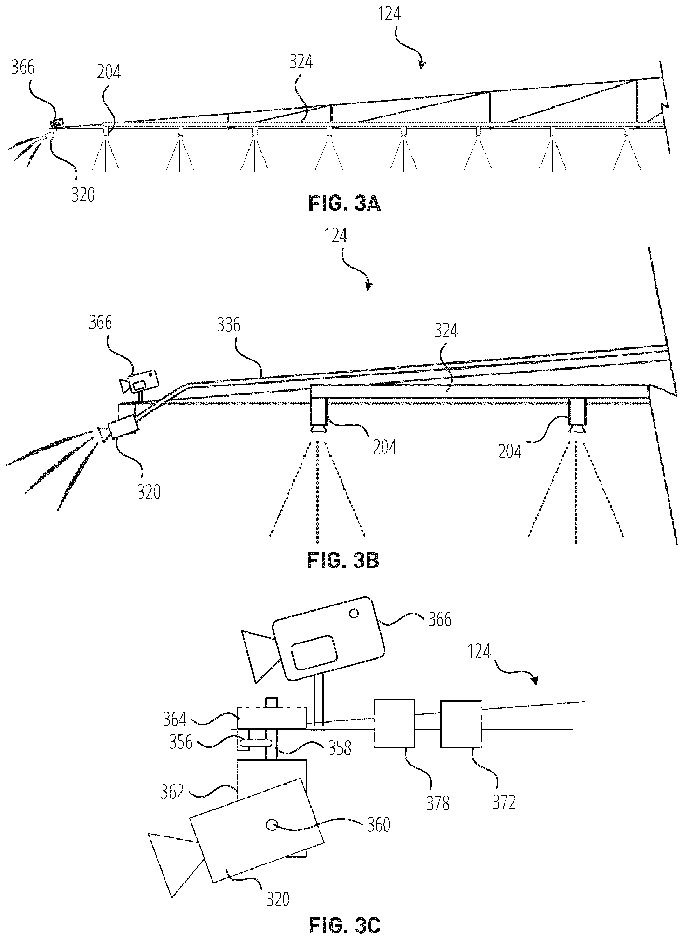

FIG. 3A is a simplified rear view of a portion of the boom arm 124, showing main nozzles 204 spaced along the boom arm 124 and connected to a main product line 324 (which is part of the liquid distribution system 202 shown in FIG. 2).

FIG. 3B shows the end of the boom arm 124 in more detail. The main nozzles 204 may generally be evenly spaced along the boom arm 124 so that spray from the main nozzles 204 may consistently apply the main product from the main product tank 110 (FIG. 1) to crops under the boom arm 124 (i.e., directed toward the ground surface below the crop sprayer 102 (FIG. 1).

The boom arm 124 also includes a secondary nozzle 320 adjacent a distal end of the boom arm 124 to distribute a secondary product different from the main product. The secondary nozzle 320 is in fluid communication to the secondary product tank 116 (FIG. 1) through a secondary product line 336 of the liquid distribution system 202 (FIG. 2). In use, secondary product is conveyed from the secondary product tank 116 by the secondary product line 336 to the secondary nozzle 320. The secondary nozzle 320 is typically isolated from the main product tank 110 (and the main nozzles 204 are isolated from the secondary product tank 116) because the main product in the main product tank 110 and the secondary product in the secondary product tank 116 are intended to be applied to different areas of the agricultural field. For example, the main product tank 110 may contain a main product including an herbicide formulated to kill weeds and grass without damaging crops, and the secondary product tank 116 may contain a secondary product including an herbicide formulated to kill weeds without killing grass. Thus, the secondary product tank 116 and the secondary nozzle 320 may be used to treat the edges of a field with the secondary product where crops are not intended to be planted at the same time the main product tank 110 and main nozzles 204 treat the crops with the main product.

The secondary nozzle 320 may be configured to spray liquid beyond the distal end of the boom arm 124. In some embodiments, the secondary nozzle 320 may be designed to spread liquid laterally outward from the secondary nozzle 320 and disperse the liquid over a wide area. This type of nozzle may be referred to in the art as a "boomless" nozzle. One such nozzle is described, for example, in U.S. Patent 8,668,153, "Spray Nozzle for Low Clearance Spraying," granted March 11, 2014. In some embodiments, the secondary nozzle 320 may be configured to spray a stream of liquid, which may be useful for spraying individual plants (e.g., trees).

FIG. 3C is a simplified view showing how the secondary nozzle 320 may be coupled to the boom arm 124. For simplicity of illustration, the secondary product line 336 is omitted from FIG. 3C. The secondary nozzle 320 may be mounted to a bracket 362 that is rotatably mounted to the boom arm 124 via a first pivot 358 (e.g., a shaft). A horizontal adjustment motor 364 (e.g., a servo motor) may control rotation of the bracket 362 via an arm 356. The secondary nozzle 320 itself may rotate about a second pivot second pivot 360 relative to the bracket 362, which rotation may be controlled by another motor. Thus, the secondary nozzle 320 may move relative to the boom arm 124 with at least two degrees of freedom, enabling the operator to apply the secondary product to accommodate various conditions. A spray nozzle controller 378 is illustrated as secured to the boom arm 124. The spray nozzle controller 378 is configured to control the secondary nozzle 320 (e.g., by activating motors to move the secondary nozzle 320 relative to the first pivot 358 and the second pivot 360).

As discussed above, the distal end of the boom arm 124 may be a relatively long distance from an operator of the crop sprayer 102 within the operator cab 106. Accordingly, it may be difficult for the operator to accurately visualize a spray target for the secondary nozzle 320 and/or judge how to properly control the secondary nozzle 320. As a result, the boom arm 124 may also carry a computer vision system 366 configured to capture an image at or near the distal end of the boom arm 124. The computer vision system 366 may include one or more image sensors (e.g., cameras, Radar sensors, LiDAR sensors) across one or more measurement spectra (e.g., ultrasonic, visible light, infrared, ultraviolet, radio frequency, etc.). In some embodiments, the computer vision system 366 may be coupled to a circuity and a spray nozzle controller configured to adjust the secondary nozzle 320 in response to an image captured by the computer vision system 366.

Another issue resulting from a relatively long boom arm 124 is that the distal end of the boom arm 124 may experience a relatively large amount of motion (e.g., wobble). Also, small positional adjustments at a proximal end of the boom arm 124 may translate into large movements at the distal end of the boom arm 124. As a result, one or more sensors 372 may be mounted to the boom arm 124 proximate to the distal end to monitor movement of the distal end of the boom arm 124. By way of non-limiting example, the one or more sensors 372 may include one or more accelerometers (e.g., one-, two-, or three-dimensional accelerometer sensing), one or more height detectors (e.g., laser proximity detectors to detect a distance from the one or more sensors 372 to the ground), or combinations thereof. A computer vision sprayer control system may control the spray nozzle controller 378 to make adjustments to the secondary nozzle 320 to compensate for motion detected by the one or more sensors 372.

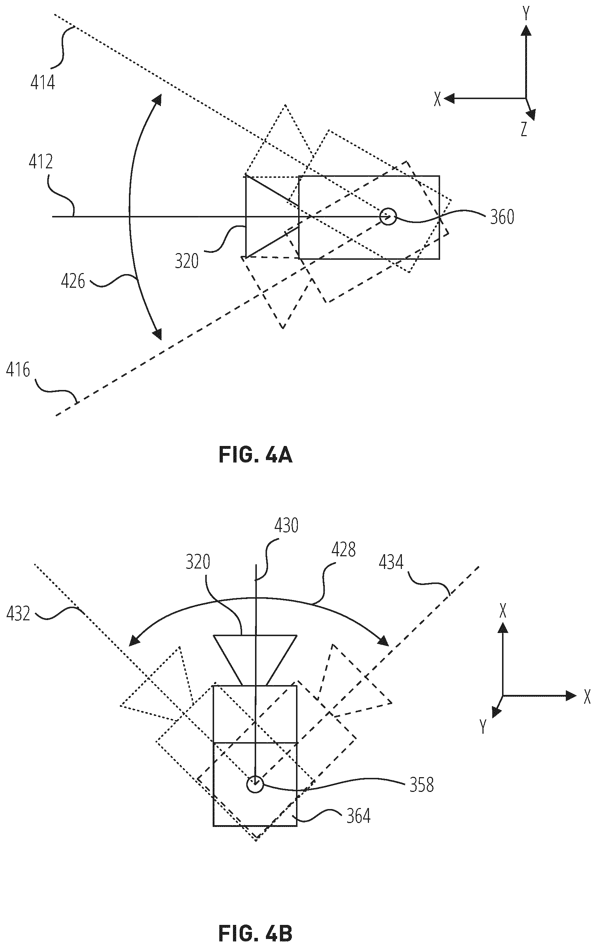

FIG. 4A is a side view of the secondary nozzle 320 of FIG. 3A, FIG. 3B, and FIG. 3C showing vertical adjustment 426 of the secondary nozzle 320. An X, Y, Z reference axis is illustrated with an X direction pointing laterally outward from the crop sprayer 102 of FIG. 1 (e.g., in substantially a direction in which the boom arm 124 extends from the crop sprayer 102); a Y direction that is vertical (e.g., substantially normal to the ground); and a Z direction (out from the page of FIG. 4A) that is in substantially a forward direction of travel for the crop sprayer 102.

FIG. 4A shows the secondary nozzle 320 pointing in a vertical reference direction 412 (e.g., substantially the X direction), which may be a default position for the secondary nozzle 320. The secondary nozzle 320 is configured to rotate on the second pivot 360 (e.g., extending in the Z direction) to move an end of the secondary nozzle 320 vertically up and down (vertical adjustment 426). For example, FIG. 4A also shows the secondary nozzle 320 pointing in a first vertical example direction 414 (illustrated using dotted lines) above the vertical reference direction 412 and in a second vertical example direction 416 (illustrated using dashed lines) below the vertical reference direction 412.

FIG. 4B is a top view of the secondary nozzle 320 of FIG. 3A, FIG. 3B, and FIG. 3C showing horizontal adjustment 428 of the secondary nozzle 320. The X, Y, Z reference axis is illustrated to show an orientation of the secondary nozzle 320. FIG. 4B shows the secondary nozzle 320 pointing in a horizontal reference direction 430 (e.g., substantially in the X direction), which may be a default position for the secondary nozzle 320. The secondary nozzle 320 is configured to rotate on the first pivot 358 (e.g., extending in the Y direction) responsive to motion of the horizontal adjustment motor 364 to move the end of the secondary nozzle 320 horizontally left and right (horizontal adjustment 428). For example, FIG. 4B also shows the secondary nozzle 320 pointing in a first horizontal example direction 432 (illustrated using dotted lines) to the left of the horizontal reference direction 430 and in a second horizontal example direction 434 (illustrated using dashed lines) to the right of the horizontal reference direction 430.

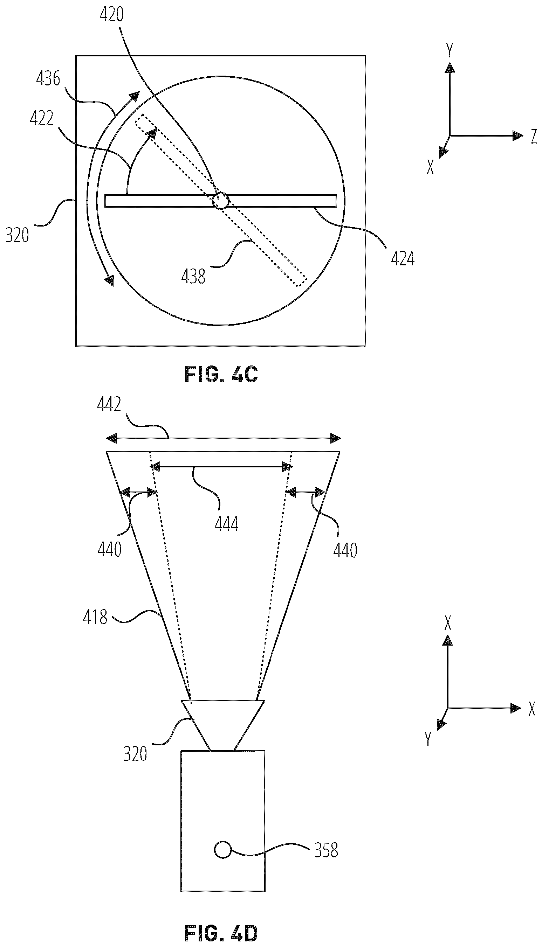

FIG. 4C is a front view of the secondary nozzle 320 of FIG. 3A, FIG. 3B, and FIG. 3C showing rotational adjustment 436 of the secondary nozzle 320. The X, Y, Z reference axis is illustrated to show an orientation of the secondary nozzle 320. As the secondary product exits the secondary nozzle 320, a spray pattern 418 (FIG. 4D) of the secondary product may be at least substantially planar (e.g., similar to a shape of a flat fan blade). A cross section of the spray pattern 418 at the secondary nozzle 320 may be substantially linear (e.g., which may result from a line of holes to release the secondary product), as is shown by a reference fan blade orientation 424 in FIG. 4C. Specifically, the reference fan blade orientation 424 corresponds to a horizontally oriented (e.g., the X-Z plane) spray pattern. This reference fan blade orientation 424 may in some instances be a default orientation for the fan spray pattern. The fan blade position is configured to rotate on a third pivot 420 (e.g., extending in the X direction) to rotate the fan blade position (rotational adjustment 436). For example, FIG. 4C shows the fan blade rotated by an example rotational angle 422 to an example rotated orientation 438 (e.g., illustrated using dotted lines).

FIG. 4D is a top view of the secondary nozzle 320 of FIG. 3A, FIG. 3B, and FIG. 3C showing spray pattern width adjustment 440. The X, Y, Z, reference axis is illustrated to show an orientation of the secondary nozzle 320. FIG. 4D shows the spray pattern 418 of the secondary nozzle 320 at a reference spray pattern width 442, which may be a default spray pattern width. The secondary nozzle 320 is configured to widen and narrow the spray pattern 418 (spray pattern width adjustment 440). For example, FIG. 4D also shows the spray pattern 418 narrowed to an example adjusted spray pattern width 444 (illustrated using dotted lines).

The views of FIG. 4A, FIG. 4B, FIG. 4C, and FIG. 4D illustrate four degrees of freedom for control of the secondary nozzle 320. The vertical adjustment 426 and the horizontal adjustment 428 illustrated in FIG. 4A and FIG. 4B, respectively, enable the secondary nozzle 320 to point in a variety of different directions. The rotational adjustment 436 illustrated in FIG. 4C enables the secondary nozzle 320 to orient the spray pattern 418 in a variety of different angles (e.g., 180-degree rotation would enable all possible rotational angles). This rotational adjustment 436 may influence an amount of volume of the secondary product applied per unit area. Finally, the spray pattern width adjustment 440 illustrated in FIG. 4D enables the secondary nozzle 320 to release the spray pattern 418 with any of a variety of different widths.

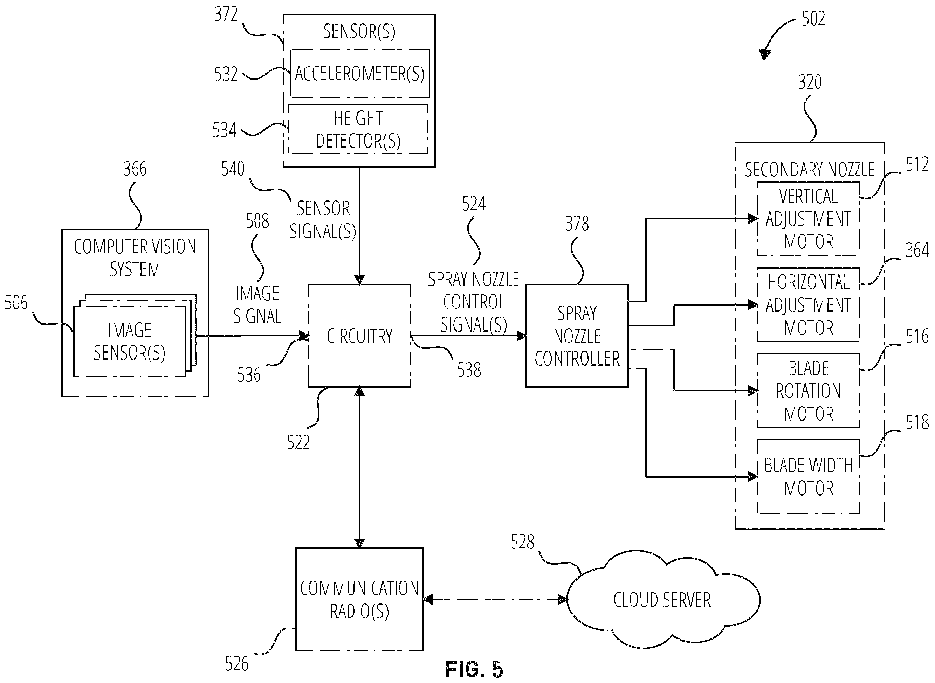

FIG. 5 is a block diagram of a computer vision sprayer control system 502 to control the secondary nozzle 320 of FIG. 3A, FIG. 3B, and FIG. 3C, according to some embodiments. The computer vision sprayer control system 502 includes the computer vision system 366, the secondary nozzle 320, the spray nozzle controller 378, and the one or more sensors 372 discussed with reference to FIG. 3A, FIG. 3B, and FIG. 3C. The computer vision sprayer control system 502 also includes circuitry 522, one or more communication radios 526, and a cloud server 528.

As discussed above, the computer vision system 366 may be mounted at the distal end of the boom arm 124 of the boom 112 carried by the crop sprayer 102 (FIG. 1). The computer vision system 366 may include one or more image sensors 506 configured to sense waves taken from one or more measurement spectra. The computer vision system 366 is configured to generate an image signal 508 corresponding to an image captured by the one or more image sensors 506. In some embodiments, the image signal 508 corresponds to a three-dimensional image (e.g., using Radar, LiDAR, or some other depth perception data captured using the one or more image sensors 506). In some embodiments, the image signal 508 corresponds to a two-dimensional image (e.g., using camera data captured using the one or more image sensors 506).

As discussed above, the spray nozzle 510 is also mounted at the distal end of the boom arm 124. The spray nozzle 510 has at least one electrically controllable degree of freedom (e.g., at least one, two, three, or four of the four electrically controllable degrees of freedom discussed with reference to FIG. 4A, FIG. 4B, FIG. 4C, and FIG. 4D). For example, the secondary nozzle 320 may include at least three of a vertical adjustment motor 512, the horizontal adjustment motor 364 (FIG. 3C), a blade rotation motor 516, or a blade width motor 518 configured to actuate vertical adjustment 426, horizontal adjustment 428, rotational adjustment 436, or spray pattern width adjustment 440, respectively. The vertical adjustment motor 512 is configured to actuate rotation of the secondary nozzle 320 about the second pivot 360, the horizontal adjustment motor 364 is configured to actuate rotation of the secondary nozzle 320 about the second pivot 360, and the blade rotation motor 516 is configured to actuate rotation of an orientation of the spray pattern 418 (FIG. 4D) about the third pivot 420.

The spray nozzle controller 378 is operably coupled to the spray nozzle 510. The spray nozzle controller 378 is configured to control the at least one degree of freedom of the spray secondary nozzle 320 responsive to one or more spray nozzle control signals 524. In some embodiments, the one or more spray nozzle control signals 524 may indicate adjustments to be made to the at least one degree of freedom of the secondary nozzle 320 relative to predetermined reference values. For example, the one or more spray nozzle control signals 524 may indicate adjustments to be made relative to a vertical reference direction 412 (FIG. 4A), a horizontal reference direction 430 (FIG. 4B), a reference fan blade orientation 424 (FIG. 4C), and a reference spray pattern width 442.

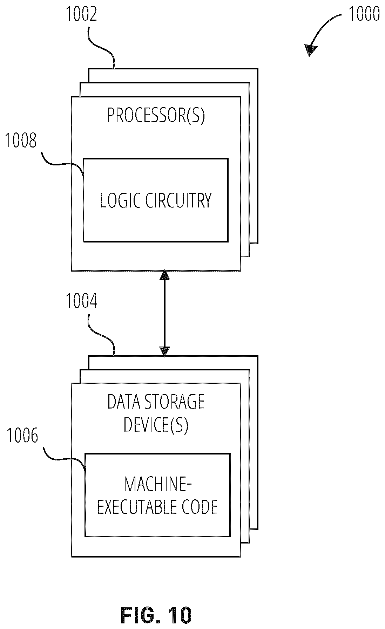

In some embodiments, the circuitry 522 may be implemented as discussed for the circuitry 1000 discussed with reference to FIG. 10. The circuitry 522 is operably coupled to the computer vision system 366, the spray nozzle controller 378, and the one or more sensors 372. The circuitry 522 is configured to receive the image signal 508 (e.g., via connecting wire, via wireless communication, etc.) from the computer vision system 366. By way of non-limiting example, the circuitry 522 may include an input terminal 536 to receive the image signal 508. The circuitry 522 is configured to determine one or more adjustments to make to the spray nozzle 510 based, at least in part, on the image signal 508. By way of non-limiting example, the circuitry 522 may be configured to make one or more of vertical adjustments 426, horizontal adjustments 428, rotational adjustments 436, or spray pattern width adjustments 440. The circuitry 522 is also configured to generate the one or more spray nozzle control signals 524 responsive to the one or more determined adjustments. By way of non-limiting example, the circuitry 522 may include an output terminal 538 to provide the one or more spray nozzle control signals 524 to the spray nozzle controller 378.

The one or more sensors 372 are configured to generate one or more sensor signals 540 indicating detected motion of the boom arm 124 (FIG.1). By way of non-limiting example, the one or more sensors 372 may include one or more accelerometers 532, one or more height detectors 534, or combinations thereof. In some embodiments, the circuitry 522 is configured to determine the one or more adjustments to make to the spray nozzle 510 based, at least in part, on the one or more sensor signals 540. For example, the one or more sensor signals 540 may indicate a certain amount of periodic deflection due to oscillation of the boom arm 124. In this example, the circuitry 522 may determine that an increase in width of the spray pattern 418 may enable the secondary nozzle 320 to cover a desired spray area despite the detected periodic deflection. In some embodiments, the one or more spray nozzle control signals 524 may include a correction signal to the spray nozzle controller 378 to correct adjustments indicated by the one or more spray nozzle control signals 524 based on corrective adjustments determined from the one or more sensor signals 540.

In some embodiments, the circuitry 522 may be configured to implement an artificial intelligence model to process the image signal 508 and the one or more sensor signals 540 to generate the one or more spray nozzle control signals 524. By way of non-limiting example, the circuitry 522 may implement a deep learning or a reinforcement learning neural network model. The artificial intelligence model may be trained (e.g., at manufacturing) prior to deployment. In some embodiments, the circuitry 522 may be configured for receiving feedback from an operator of the crop sprayer 102 (FIG. 1) to improve training and operation of the artificial intelligence model.

The artificial intelligence model may be configured to correlate spatial parameters from an image corresponding to the image signal 508 with spatial parameters for the secondary nozzle 320. For example, the artificial intelligence model may be trained to estimate distances and angles of the secondary nozzle 320 to objects and features of the image. Where depth perception imaging is used (e.g., Radar, LiDAR, other three-dimensional imaging), improved accuracy may result.

The circuitry 522 may be operably coupled with the one or more communication radios 526 (e.g., a cellular data radio such as a 4G (LTE) radio, a 5G radio, some subsequent generation radio, a WIFI radio, other radio configured for some other type of communication protocol, or combinations thereof). In some embodiments, communication between the circuitry 522 and the cloud server 528 may be direct communication through on-board circuitry such as a mobile gateway. In some embodiments, communication between the circuitry 522 and the cloud server 528 may be direct communication through a proxy device such as a smartphone or tablet. Communication between the circuitry 522 and the cloud server 528 may be bi-directional. For example, the circuitry 522 may provide, to the cloud server 528, information regarding feedback received from the operator to improve operation of other computer vision sprayer control system 502 deployed at other crop sprayers in communication with the cloud server 528. The circuitry 522 may also be configured to receive updates for improved artificial intelligence training and/or models via the cloud server 528. The cloud server 528 may be used to provide additional processing (e.g., to execute a more robust artificial intelligence model than the circuitry 522 has the processing power to implement), share training data (bi-directionally to and from the circuitry 522), update the local artificial intelligence model, other operations, or combinations thereof. In some embodiments, the circuitry 522 is configured to update training of an artificial intelligence model implemented by the circuitry 522 responsive to training information received from the cloud server 528. In some embodiments, the circuitry 522 is configured to transmit locally-generated training information of an artificial intelligence model implemented by the circuitry 522 to the cloud server 528 (e.g., to distribute to circuitry of other crop sprayers).

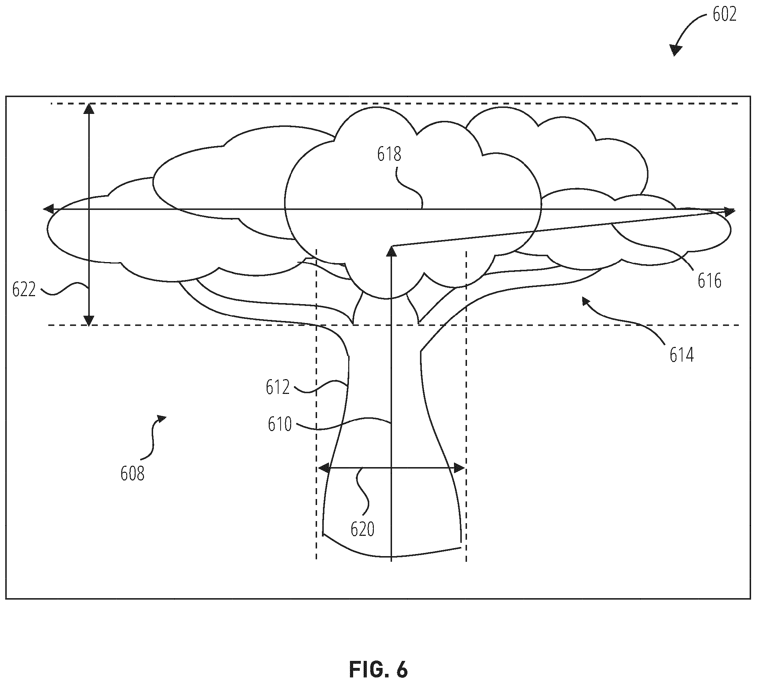

In some embodiments, the circuitry 522 may identify one or more objects or features from the image signal 508 (e.g., an example of an identified tree 608 is discussed with reference to FIG. 6). For example, the circuitry 522 may be configured to implement an artificial intelligence model trained to identify, responsive to one or more of an object or a feature identified from the image signal 508, a spray maneuver corresponding to the identified object or feature. The one or more adjustments indicated by the one or more spray nozzle control signals 524 are selected to execute the identified spray maneuver. The artificial intelligence model may be pre-trained to recognize objects or features that correspond to common use cases of the secondary nozzle 320, and implement controls corresponding to these common use cases (e.g., recognition of and spraying a tree 608 in the example of FIG. 6). Other use cases may involve using brown and green detection. For example, if a fence line does not include plants, there may be no reason to spray the fence line. Accordingly, the artificial intelligence model may be trained to control the secondary nozzle 320 to not spray the fence line in this case. In some embodiments, the circuitry 522 may be configured to autonomously identify use cases and implement controls corresponding to the use cases (e.g., without intervention from an operator of the crop sprayer 100 of FIG. 1). In some embodiments, the circuitry 522 may be configured to implement the controls corresponding to the use cases responsive to at least some operator intervention. By way of non-limiting example, the circuitry 522 may provide a user-selectable option to the operator (e.g., via an electronic display in view of the operator) to implement controls corresponding to a use case identified from image data. Responsive to a selection, by the operator, of the user-selectable option (e.g., a one-click spray option), the circuitry 522 may implement the selected controls.

FIG. 6 is a plan view of an image 602 captured by the computer vision system 366 of FIG. 3A, FIG. 3B, FIG. 3C, and FIG. 5 to illustrate an example of control of the secondary nozzle 320 to spray a tree 608. In some embodiments, an artificial intelligence model implemented by the circuitry 522 (FIG. 5) may be trained to recognize a tree 608. For example, the artificial intelligence model may be trained to identify a trunk 612 and a canopy 614 of the tree 608.

In some embodiments, the artificial intelligence model may also be trained to execute controls over the secondary nozzle 320 to spray the tree 608 with the secondary product. For example, the artificial intelligence model may be trained to identify a base of the trunk 612, point the secondary nozzle 320 at the base of the trunk 612 (e.g., via vertical adjustment 426 (FIG. 4A) and/or horizontal adjustment 428 (FIG. 4B)), adjust a width of the spray pattern 418 (FIG. 4D) to cover a tree trunk width 620 (e.g., via rotational adjustment 436 (FIG. 4C) and/or spray pattern width adjustment 440 (FIG. 4D), activate spraying of the secondary nozzle 320, and sweep the spray pattern up the trunk 612 in a first sweep 610 (e.g., via vertical adjustment 426).

The artificial intelligence model may be trained to deactivate spraying of the secondary nozzle 320, identify an end of the canopy 614, sweep the secondary nozzle 320 to point at the right end (from the perspective of the image 602) of the canopy 614 in a second sweep 616 (e.g., via vertical adjustment 426 and/or horizontal adjustment 428), and adjust a width of the spray pattern 418 to cover a canopy width 622. The artificial intelligence model may be trained to then activate spraying of the secondary nozzle 320, sweep the spray pattern 418 across the canopy 614 in a third sweep 618, and deactivate spraying of the secondary nozzle 320.

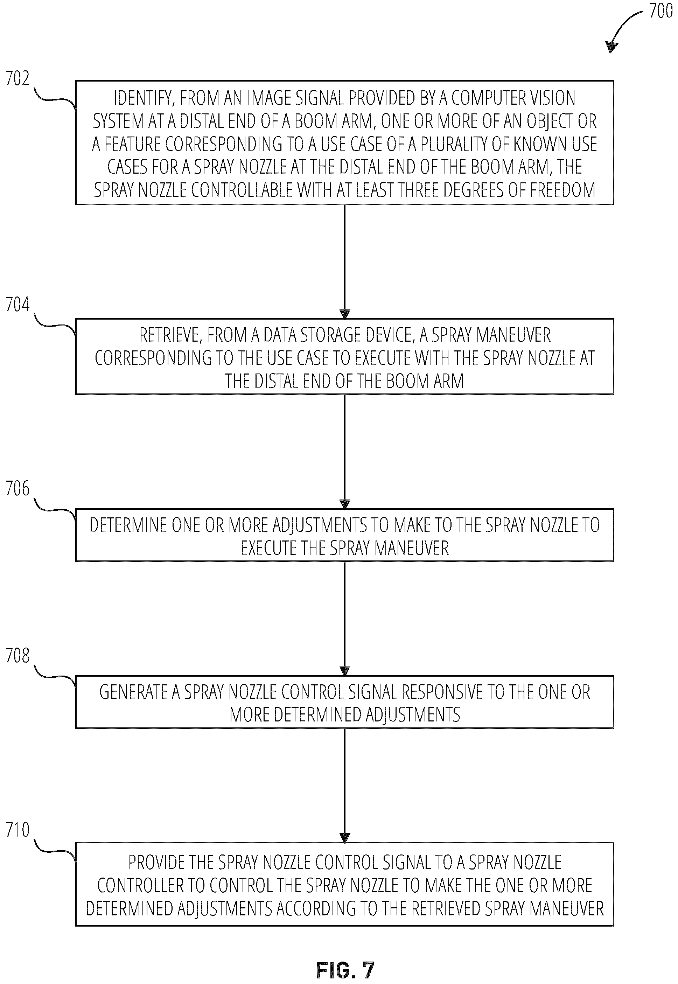

FIG. 7 is a flowchart illustrating a method 700 of operating a computer vision sprayer control system (e.g., the computer vision sprayer control system 502 of FIG. 5), according to some embodiments. At operation 702, the method 700 includes identifying, from an image signal (e.g., image signal 508 of FIG. 5) provided by a computer vision system (e.g., computer vision system 366 of FIG. 3A, FIG. 3B, FIG. 3C, and FIG. 5) at a distal end of a boom arm (e.g., boom arm 124 or boom arm 126 of FIG. 1), one or more of an object or a feature corresponding to a use case of a plurality of known use cases for a spray nozzle (e.g., secondary nozzle 320 of FIG. 3A, FIG. 3B, and FIG. 3C) at the distal end of the boom arm. The spray nozzle is controllable with at least one degree of freedom (e.g., at least one of vertical adjustment 426, horizontal adjustment 428, rotational adjustment 436, or spray pattern width adjustment 440 of FIG. 4A, FIG. 4B, FIG. 4C, or FIG. 4D, respectively). By way of non-limiting example, identifying one or more of an object or a feature may include identifying a tree (e.g., tree 608 of FIG. 6).

At operation 704, the method 700 includes retrieving, from a data storage device (e.g., the storage 1004 of FIG. 10), a spray maneuver corresponding to the use case to execute with the spray nozzle at the distal end of the boom arm. By way of non-limiting example, where identifying one or more of an object or a feature includes identifying a tree, retrieving the spray maneuver may include retrieving a tree spraying maneuver (e.g., as discussed with reference to FIG. 6). By way of non-limiting example, the tree spraying maneuver may include sweeping a spray pattern up a tree trunk (e.g., the first sweep 610 of FIG. 6) and sweeping the spray pattern laterally across a tree canopy (e.g., the third sweep 618 of FIG. 6).

At operation 706, the method 700 includes determining one or more adjustments to make to the spray nozzle to execute the spray maneuver. In some embodiments, determining the one or more adjustments to make to the spray nozzle to execute the spray maneuver comprises determining one or more of vertical adjustments, horizontal adjustments, rotational adjustments, or spray pattern width adjustments. At operation 708, the method 700 includes generating a spray nozzle control signal (e.g., one or more spray nozzle control signals 524 of FIG. 5) responsive to the one or more determined adjustments. At operation 710, the method 700 includes providing the spray nozzle control signal to a spray nozzle controller (e.g., spray nozzle controller 378 of FIG. 5) to control the spray nozzle to make the one or more determined adjustments according to the retrieved spray maneuver.

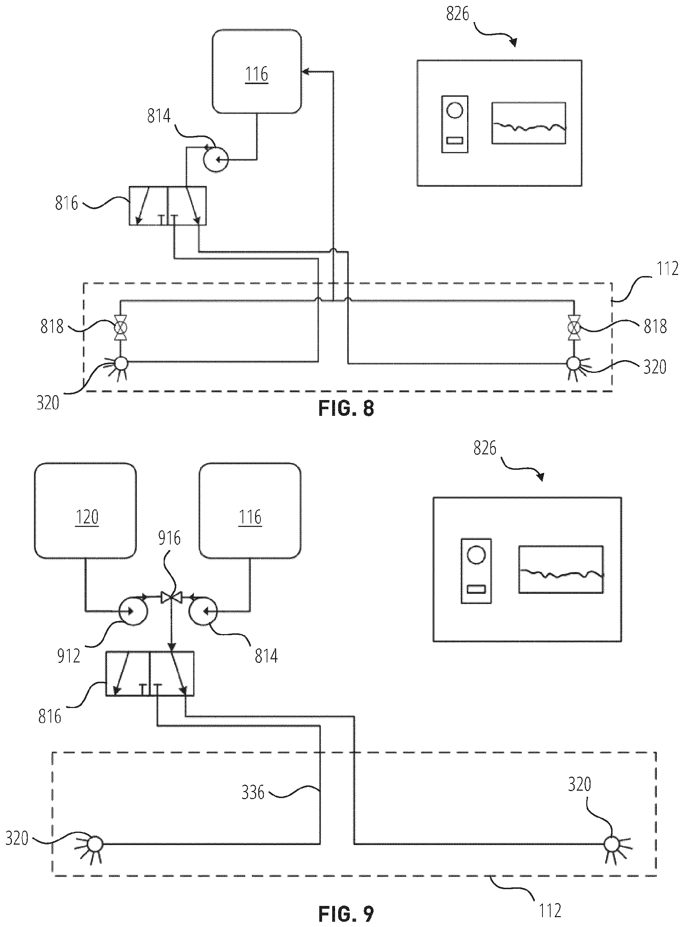

FIG. 8 is a simplified schematic illustrating how the secondary nozzle 320 may be connected to the secondary product tank 116. A pump 814 in fluid communication with the secondary product tank 116 pumps secondary product from the secondary product tank 116 through the secondary product line 336 to the secondary nozzle 320, which is mounted at one end of the boom 112. The boom 112 may have another secondary nozzle 320 at the opposite end of the boom 112. If there are two secondary nozzles 320 (e.g., one at a distal end of the boom arm 124 and another at a distal end of the boom arm 126), a valve 816 switches flow between the secondary nozzles 320, such that only one operates at a time. One or more recirculation valves 818 may be opened to allow recirculation of the secondary product for priming or cleaning the secondary product line 336. A computer 826 (typically in the operator cab 106 (FIG. 1), which may include the circuitry 522 of FIG. 5), may control operation of the pump 814, valve 816, and recirculation valves 818. The computer 826 may also control the movement of the secondary nozzle 320 (e.g., using the circuitry 522 of FIG. 5) relative to the boom 112. The circuitry 522 may be configured to control both instances of the secondary nozzle 320 in instances where both boom arms 124, 126 include a secondary nozzle 320. The computer 826 may also control flow of the main product from the main product tank 110 to the main nozzles 204 as described, for example, in International Patent Application PCT/IB2023/057023.

FIG. 9 is a simplified schematic illustrating another way the secondary nozzle 320 may be connected to the secondary product tank 116. A pump 814 in fluid communication with the secondary product tank 116 pumps secondary product from the secondary product tank 116 to a mixing valve 916. Another pump 912 pumps another liquid (typically water) to the mixing valve 916, where the two liquids are mixed. The mixed liquid passes through the valve 816 (if present) to switch flow between two secondary nozzles 320. In this example, the secondary product in the secondary product tank 116 may be an undiluted chemical, and water may be added to bring the concentration down to a selected amount for application. A recirculation line is not shown in FIG. 9 because typically product would not be recirculated after dilution.

It will be appreciated by those of ordinary skill in the art that functional elements of embodiments disclosed herein (e.g., functions, operations, acts, processes, and/or methods) may be implemented in any suitable hardware, software, firmware, or combinations thereof. FIG. 10 illustrates non-limiting examples of implementations of functional elements disclosed herein. In some embodiments, some or all portions of the functional elements disclosed herein may be performed by hardware specially configured for carrying out the functional elements.

FIG. 10 is a block diagram of circuitry 1000 that, in some embodiments, may be used to implement various functions, operations, acts, processes, and/or methods disclosed herein. The circuitry 1000 includes one or more processors 1002 (sometimes referred to herein as "processors 1002") operably coupled to one or more data storage devices (sometimes referred to herein as "storage 1004"). The storage 1004 includes machine-executable code 1006 stored thereon and the processors 1002 include logic circuitry 1008. The machine-executable code 1006 includes information describing functional elements that may be implemented by (e.g., performed by) the logic circuitry 1008. The logic circuitry 1008 is adapted to implement (e.g., perform) the functional elements described by the machine-executable code 1006. The circuitry 1000, when executing the functional elements described by the machine-executable code 1006, should be considered as special purpose hardware configured for carrying out functional elements disclosed herein. In some embodiments the processors 1002 may be configured to perform the functional elements described by the machine-executable code 1006 sequentially, concurrently (e.g., on one or more different hardware platforms), or in one or more parallel process streams.

When implemented by logic circuitry 1008 of the processors 1002, the machine-executable code 1006 is configured to adapt the processors 1002 to perform operations of embodiments disclosed herein. For example, the machine-executable code 1006 may be configured to adapt the processors 1002 to perform at least a portion or a totality of the method 700 of FIG. 7. As another example, the machine-executable code 1006 may be configured to adapt the processors 1002 to perform at least a portion or a totality of the operations discussed for the circuitry 522 of FIG. 5. As a specific, non-limiting example, the machine-executable code 1006 may be configured to adapt the processors 1002 to determine one or more adjustments to make to a spray nozzle (e.g., the secondary nozzle 320 of FIG. 3A, FIG. 3B, FIG. 3C, and FIG. 5) based, at least in part, on an image signal (e.g., the image signal 508 of FIG. 5). As another specific, non-limiting example, the machine-executable code 1006 may be configured to adapt the processors 1002 to generate a spray nozzle control signal (e.g., the one or more spray nozzle control signals 524 of FIG. 5) responsive to the one or more determined adjustments.

The processors 1002 may include a general purpose processor, a special purpose processor, a central processing unit (CPU), a microcontroller, a programmable logic controller (PLC), a digital signal processor (DSP), an application specific integrated circuit (ASIC), a field-programmable gate array (FPGA) or other programmable logic device, discrete gate or transistor logic, discrete hardware components, other programmable device, or any combination thereof designed to perform the functions disclosed herein. A general-purpose computer including a processor is considered a special-purpose computer while the general-purpose computer is configured to execute functional elements corresponding to the machine-executable code 1006 (e.g., software code, firmware code, hardware descriptions) related to embodiments of the present disclosure. It is noted that a general-purpose processor (may also be referred to herein as a host processor or simply a host) may be a microprocessor, but in the alternative, the processors 1002 may include any conventional processor, controller, microcontroller, or state machine. The processors 1002 may also be implemented as a combination of computing devices, such as a combination of a DSP and a microprocessor, a plurality of microprocessors, one or more microprocessors in conjunction with a DSP core, or any other such configuration.

In some embodiments the storage 1004 includes volatile data storage (e.g., random-access memory (RAM)), non-volatile data storage (e.g., Flash memory, a hard disc drive, a solid state drive, erasable programmable read-only memory (EPROM), etc.). In some embodiments the processors 1002 and the storage 1004 may be implemented into a single device (e.g., a semiconductor device product, a system on chip (SOC), etc.). In some embodiments the processors 1002 and the storage 1004 may be implemented into separate devices.

In some embodiments the machine-executable code 1006 may include computer-readable instructions (e.g., software code, firmware code). By way of non-limiting example, the computer-readable instructions may be stored by the storage 1004, accessed directly by the processors 1002, and executed by the processors 1002 using at least the logic circuitry 1008. Also by way of non-limiting example, the computer-readable instructions may be stored on the storage 1004, transferred to a memory device (not shown) for execution, and executed by the processors 1002 using at least the logic circuitry 1008. Accordingly, in some embodiments the logic circuitry 1008 includes electrically configurable logic circuitry 1008.

In some embodiments the machine-executable code 1006 may describe hardware (e.g., circuitry) to be implemented in the logic circuitry 1008 to perform the functional elements. This hardware may be described at any of a variety of levels of abstraction, from low-level transistor layouts to high-level description languages. At a high-level of abstraction, a hardware description language (HDL) such as an IEEE Standard hardware description language (HDL) may be used. By way of non-limiting examples, VERILOG^{™}, SYSTEMVERILOG^{™} or very large scale integration (VLSI) hardware description language (VHDL^{™}) may be used.

HDL descriptions may be converted into descriptions at any of numerous other levels of abstraction as desired. As a non-limiting example, a high-level description can be converted to a logic-level description such as a register-transfer language (RTL), a gate-level (GL) description, a layout-level description, or a mask-level description. As a non-limiting example, micro-operations to be performed by hardware logic circuits (e.g., gates, flip-flops, registers, without limitation) of the logic circuitry 1008 may be described in a RTL and then converted by a synthesis tool into a GL description, and the GL description may be converted by a placement and routing tool into a layout-level description that corresponds to a physical layout of an integrated circuit of a programmable logic device, discrete gate or transistor logic, discrete hardware components, or combinations thereof. Accordingly, in some embodiments the machine-executable code 1006 may include an HDL, an RTL, a GL description, a mask level description, other hardware description, or any combination thereof.

In embodiments where the machine-executable code 1006 includes a hardware description (at any level of abstraction), a system (not shown, but including the storage 1004) may be configured to implement the hardware description described by the machine-executable code 1006. By way of non-limiting example, the processors 1002 may include a programmable logic device (e.g., an FPGA or a PLC) and the logic circuitry 1008 may be electrically controlled to implement circuitry corresponding to the hardware description into the logic circuitry 1008. Also by way of non-limiting example, the logic circuitry 1008 may include hard-wired logic manufactured by a manufacturing system (not shown, but including the storage 1004) according to the hardware description of the machine-executable code 1006.

Regardless of whether the machine-executable code 1006 includes computer-readable instructions or a hardware description, the logic circuitry 1008 is adapted to perform the functional elements described by the machine-executable code 1006 when implementing the functional elements of the machine-executable code 1006. It is noted that although a hardware description may not directly describe functional elements, a hardware description indirectly describes functional elements that the hardware elements described by the hardware description are capable of performing.

All references cited herein are incorporated herein in their entireties. If there is a conflict between definitions herein and in an incorporated reference, the definition herein shall control.

## Claims

1. A circuitry of a computer vision sprayer control system, the circuitry comprising:
an input terminal to receive an image signal captured by a computer vision system disposed at a distal end of a boom arm of a boom carried by a crop sprayer;
an output terminal to provide a spray nozzle control signal to a spray nozzle controller configured to control operation of a spray nozzle at the distal end of the boom arm, the spray nozzle electrically controllable, by the spray nozzle controller, with at least one degree of freedom; and
one or more processors operably coupled to the input terminal and the output terminal, the one or more processors configured to:
determine one or more adjustments to make to the spray nozzle based, at least in part, on the image signal; and
generate the spray nozzle control signal responsive to the one or more determined adjustments.

2. The circuitry of claim 1, wherein the spray nozzle is configured to make at least three of vertical adjustments, horizontal adjustments, rotational adjustments, or spray pattern width adjustments.

3. The circuitry of claim 1, wherein the image signal corresponds to a three-dimensional image.

4. The circuitry of claim 1, wherein the one or more processors are configured to implement an artificial intelligence model trained to identify, responsive to one or more of an object or a feature identified from the image signal, a spray maneuver corresponding to the identified object or feature, the one or more adjustments selected to execute the identified spray maneuver.

5. A computer vision sprayer control system, comprising:
a computer vision system at a distal end of a boom arm of a boom carried by a crop sprayer, the computer vision system configured to generate an image signal;
a spray nozzle mounted at the distal end of the boom arm, the spray nozzle having at least one electrically controllable degree of freedom;
a spray nozzle controller operably coupled to the spray nozzle, the spray nozzle controller configured to control the at least one electrically controllable degree of freedom of the spray nozzle responsive to a spray nozzle control signal; and
a circuitry operably coupled to the computer vision system and the spray nozzle controller, the circuitry configured to:
determine one or more adjustments to make to the spray nozzle based, at least in part, on the image signal; and
generate the spray nozzle control signal responsive to the one or more determined adjustments.

6. The computer vision sprayer control system of claim 5, further comprising one or more sensors mounted to the boom arm, the one or more sensors configured to generate one or more sensor signals indicating detected motion of the boom arm, the circuitry configured to determine the one or more adjustments to make to the spray nozzle based, at least in part, on the one or more sensor signals; optionally wherein the one or more sensors comprise one or more of an accelerometer or a height sensor.

7. The computer vision sprayer control system of claim 5, further comprising a communication interface configured to enable the circuitry to engage in bi-directional communication with a cloud server; optionally wherein the circuitry is configured to update training of an artificial intelligence model implemented by the circuitry responsive to training information received from the cloud server; or wherein the circuitry is configured to transmit locally-generated training information of an artificial intelligence model implemented by the circuitry to the cloud server.

8. The computer vision sprayer control system of claim 5, wherein the at least one electrically controllable degree of freedom of the spray nozzle includes at least three of vertical adjustment, horizontal adjustment, rotational adjustment, or spray pattern width adjustment.

9. The computer vision sprayer control system of claim 5, wherein the spray nozzle has four electrically controllable degrees of freedom.

10. The computer vision sprayer control system of claim 5, wherein the spray nozzle comprises a fan blade nozzle.

11. The computer vision sprayer control system of claim 5, further comprising a plurality of main nozzles distributed along the boom arm, the plurality of main nozzles configured to spray a main product, wherein the spray nozzle comprises a secondary nozzle configured to spray a secondary product that is different from the main product; optionally wherein the secondary nozzle is configured to spray the secondary product simultaneously with spraying, by the plurality of main nozzles, of the main product.

12. A method of operating a computer vision sprayer control system, the method comprising:
identifying, from an image signal provided by a computer vision system at a distal end of a boom arm, one or more of an object or a feature corresponding to a use case of a plurality of known use cases for a spray nozzle at the distal end of the boom arm, the spray nozzle controllable with at least one degree of freedom;
retrieving, from a data storage device, a spray maneuver corresponding to the use case to execute with the spray nozzle at the distal end of the boom arm;
determining one or more adjustments to make to the spray nozzle to execute the spray maneuver;
generating a spray nozzle control signal responsive to the one or more determined adjustments; and
providing the spray nozzle control signal to a spray nozzle controller to control the spray nozzle to make the one or more determined adjustments according to the retrieved spray maneuver.

13. The method of claim 12, wherein determining the one or more adjustments to make to the spray nozzle to execute the spray maneuver comprises determining one or more of vertical adjustments, horizontal adjustments, rotational adjustments, or spray pattern width adjustments.

14. The method of claim 13, wherein identifying one or more of an object or a feature comprises identifying a tree.

15. The method of claim 14, wherein retrieving the spray maneuver comprises retrieving a tree spraying maneuver; optionally wherein the tree spraying maneuver comprises sweeping a spray pattern up a tree trunk and sweeping the spray pattern laterally across a tree canopy.
